Europäisches Patentamt

(19) European Patent Office

Office européen des brevets

(11) Publication number: **0 239 656**
B1

## (12) EUROPEAN PATENT SPECIFICATION

(45) Date of publication of the patent specification:
01.03.89

(51) Int. Cl.⁴: **A23L 1/16**

(21) Application number: **86104389.1**

(22) Date of filing: **01.04.86**

(54) **Process for producing shelf stable pasta containing product.**

(43) Date of publication of application:
07.10.87 Bulletin 87/41

(45) Publication of the grant of the patent:
01.03.89 Bulletin 89/9

(84) Designated Contracting States:
AT BE CH DE FR IT LI LU NL SE

(56) References cited:
EP-A- 0 084 831
FR-A- 2 282 813
GB-A- 2 036 533
US-A- 3 886 296
US-A- 4 394 397

CHEMICAL ABSTRACTS, vol. 99, no. 21, November 1983,
page 513, abstract no. 174497b, Columbus, Ohio, US; Y.
HINO: "Preservation of cooked noodles with some
additives in place of soaking in organic acid solution",
& KAGAWA-KEN HAKKO SHOKUHIN SHIKENJO
HOKOKU 1982, (74), 34-42 000
CHEMICAL ABSTRACTS, vol. 80, no. 15, 15th April 1974,
page 252, abstract no. 81113r, Columbus, Ohio, US; &
JP-A-73 05 025 (YOSHIKAWA, TOSHIHIKO) 13-02-1973

(73) Proprietor: **SOCIETE DES PRODUITS NESTLE S.A., Case
postale 353, CH-1800 Vevey(CH)**

(72) Inventor: **Doster, Robert C., 9711 Andora Avenue,
Chatsworth Cal. 91311(US)**
Inventor: **Kahn, Karen F., 9907 White Oak Av. No. 327,
Northridge Cal. 91325(US)**

## Description

This invention relates to the production of pre-cooked, shelf stable, pasta-containing products, such as, for example, spaghetti with meat sauce, spaghetti with meatballs, beef or cheese ravioli in sauce, lasagna, cannelloni, and the like. More particularly, the invention relates to the production of novel hydrated pasta-containing products, which are thermally processed under relatively mild conditions to render the products commercially sterile without adversely affecting the texture, taste, color or appearance of the pasta or other components of the products.

As used herein, the term "commercially sterile" means (a) the absence of microorganisms capable of growing in and spoiling the food under normal non-refrigerated storage conditions, and (b) the absence of pathogenic microorganisms capable of proliferating in the food.

Conventional pasta products, such as macaroni, spaghetti, noodles and the like, consist basically of dough made with one or more of semolina, farina, or flour, and water, which is formed under pressure into a variety of sizes and shapes, are dried to a moisture content of 12% or less to obtain a hard product. At such moisture levels, the product will not support the growth of mold, yeast or other spoilage microorganisms, so that the products, if kept dry, can be stored without refrigeration for long periods of time. Dried pasta products are prepared for consumption by cooking in boiling water for about 8 to 15 minutes to rehydrate and soften the pasta and provide it with a desirable firm, slightly chewy texture.

In order to facilitate the use of pasta products by consumers in the home, many pasta products are pre-cooked and provided in canned form, together with tomato sauce, meat sauce, gravy, meatballs, and the like. The production of such canned pasta-containing products typically includes the steps of blanching dried pasta in boiling water to hydrate and soften the pasta, with the hydrated pasta containing about 70%–75% by weight of water, filling the pre-cooked pasta into cans together with sauce, meat, and the like, sealing the cans and retorting the sealed cans under time-temperature conditions sufficient to provide a commercially sterile product. Since the pasta, upon hydration, has a moisture content which will support the growth of spoilage organisms, the canned pasta-containing products must be subjected to relatively severe heat processing conditions in order to produce a commercially sterile product. For example, canned spaghetti in 300 × 407 cans typically is heat processed at 115°C for 55 minutes. However, subjecting the canned pasta to such high temperature-long time heat processing reduces the desired firm texture of the pasta, causing it to become soft and mushy. The taste and texture of the resulting retorted product is undesirable to many consumers and has limited the acceptability of canned pasta-containing products.

The present invention provides for the production of hydrated pasta-containing products, which are formulated in such a manner so as to allow the product, when packed in sealed containers, to be heat processed under relatively mild atmospheric conditions, rather than by retorting, in order to produce a commercially sterile product which may be stored under non-refrigerated conditions. Since the product is not subjected to the severe time-temperature conditions required in retorting, the pasta component of the product retains a firm texture and appearance characteristic of freshly cooked pasta products, without becoming soft and mushy.

Typically, the product of this invention contains three components, namely, a pasta component, a meat component, and a sauce component. Each of these components is formulated and/or processed to have an equilibrium pH of less than 4.6 so that the growth of microorganisms and C. botulinum spores is prevented and the product may be processed at the temperature of boiling water or less, such as by using a hot fill-hold procedure, to render it commercially sterile. Thus, in preparing the pasta component, a food grade acid is included in the ingredient mixture used to form the pasta dough which is formed under pressure into the desired size and shape. The meat component is prepared by blanching ground meat particles in a hot acid solution with the acidified meat being used as a separate component of the product or being included in the sauce component of the product. The sauce component is prepared by either the use of a food grade acid and/or through the use of high acid foods. The sauce component must be formulated so that it not only has a pH of less than 4.6, but also has a viscosity such that, when filled into containers, it completely surrounds the other components of the products.

In producing the product of the present invention, the components are heated to a temperature of at least about 85°C and, while at such an elevated temperature, filled into suitable containers, such as glass jars, cans, and the like, which are then sealed. Since each of the components has a pH of less than 4.6, the sealed product containers require only relatively mild thermal processing in order to render the product commercially sterile, such as heating the sealed containers in hot water or steam at about 88°C for 13 minutes.

The reduced heat processing necessary to achieve commercial sterility results in substantially less loss of texture in the pasta component than is usually found in canned pasta products which have been retorted, with the texture and appearance of the pasta component of the present product closely resembling that of freshly prepared cooked pasta.

As discussed hereinabove, each of the components of the product of this invention is formulated and/or processed to have an equilibrium pH of less than 4.6. The acidified pasta component of the product is prepared by mixing a food grade acid, preferably in dry form, with a farinaceous ingredient and water, with or without one or more additives, to form a dough, and forming the dough under pressure into a variety of sizes and shapes, such as spaghetti, macaroni, noodles and the like. The farinaceous ingredient may be one or more of semolina, durum flour, farina or flour, depending on the type of pasta product desired. Generally, semolina and durum flour are preferred for extruded pasta, such as spaghetti, macaroni, etc., while durum or wheat flour are preferred for sheeted pasta, such as noodles. The farinaceous ingredient is usually present in an amount of from 70 to 95% of the dry ingredient mixture, with amounts of between 80%–90% by weight of the dry mix being preferred.

Wheat gluten is typically included in the dry ingredient mix at a level of about 2 to 20% by weight of the dry mix, with amounts between 5% and 10% being preferred, to increase the protein content of the pasta thereby increasing its strength and firmness. Dehydrated egg material such as dried egg white, dried eggs and dried yolks and/or whole eggs, may if desired, be included in the ingredient mix at levels up to about 22% by weight of the dry ingredient mix. Dried eggs and dried yolks generally are used in the production of noodles, while dried egg whites are generally used in the production of extruded pasta. In addition, glyceryl monostearate may, if desired, also be included in the ingredient mix, particularly in the production of extruded pasta, to improve firmness, reduce stickiness and minimize absorption of water from the sauce component by the pasta. If used, the glyceryl monostearate preferably is present in amounts of from 0.5 to 5% by weight of the dry ingredient mix. It is to be understood that wheat gluten, eggs, and glyceryl monostearate are optional ingredients in the dry mix and are not essential in the production of the pasta component.

Sufficient food grade edible acid is included in the ingredient mix to provide the formed pasta with a pH of less than 4.6, preferably between 4.0 and 4.4. Any acid, organic or inorganic, which is suitable for use in foods and which is soluble in water may be used, such as citric, fumaric, lactic, malic, tartaric, sulfuric, hydrochloric and phosphoric acids. The acid used must not impart to the pasta a taste which is incompatible with the other components of the product at the desired pH level. Malic acid and citric acid have been found to be particularly well suited for use in acidification of the pasta component.

The pasta component is formed by blending the dry ingredients, typically the farinaceous ingredient, dehydrated egg material, wheat gluten, and food grade acid, with or without glyceryl monostearate, and adding sufficient water to form a suitable dough. Generally, water is added to the dry mix in such quantity as to produce a dough containing from about 25% to 38% moisture. The resulting dough is kneaded and formed under pressure, using conventional procedures, to form a pasta component having the desired size and shape. For example, in the production of acidified spaghetti, the dry ingredients are mixed, formed into a dough containing 30%–32% moisture, kneaded and extruded through a die in a conventional continuous auger extruder to form a continuous cord-shaped extrudate about 1.5 to 2.8 mm in diameter. The extrudate, which has a moisture content of about 30%–32%, may either be cut into desired lengths and used directly in the production of the product of the present invention, or initially dried to a moisture content of about 12% by conventional procedures and cut into desired lengths for subsequent use in producing the product. Similarly, in the production of ravioli, an acidified dough having a moisture content of 30%–36% is prepared by mixing the dry ingredients and water and the dough is formed into sheets about 2.5–5.1 mm in thickness, in a standard macaroni press. The sheeted dough is then loaded into a conventional ravioli machine, together with acidified ravioli meat filling prepared as described hereinbelow and formed into individual meat filled ravioli pieces.

The acidified meat component may be incorporated into the product of the present invention in a variety of forms, such as formed meatballs, as a meat filling in ravioli and/or as an addition to the sauce component. Generally it is preferred to prepare the acidified meat component by grinding cooked meat pieces through a 3.2–6.4 mm grid and blanching the ground meat particles in a a hot aqueous acid solution having a pH of below about 3.5 for a period of time sufficient to reduce the pH of the meat particles to less than 4.6, typically 4.3–4.4. Any of the food grade acids discussed above may be used in preparing the acid solution. The time required to reduce the pH of the meat to the desired level will vary depending upon the size of the meat particles, the pH of the acid solution and the temperature of the acid solution.

The acidified ground meat particles typically are used as a meat filling for ravioli and/or as a component of the sauce, as described more fully hereinbelow. Thus, in the production of beef raviolis, acidified ground beef is mixed with other ingredients, such as cheese, crackers, bread crumbs, seasonings, spices and water to provide an acidified meat filling having a pH below 4.6, which is loaded into a conventional ravioli machine, together with acidified sheeted dough, and formed into individual meat filled ravioli pieces comprising about 60%–70% by weight pasta and 30%–40% by weight meat filling, with the ravioli pieces preferably having a pH of no more than about 4.4.

The meat component may also be acidified by incorporating in a meat emulsion, an encapsulated acid, that is an edible acid coated with an edible fat having a melting point of above room temperature, but below about 66°C, generally between about 52°C–57°C. This method of meat acidification is particularly well suited when it is desired to incorporate meat in the product in the form of relatively large pieces having a separate identity, such as meatballs, sausage, and the like. According to this procedure, an encapsulated acid, such as malic acid coated with a 57.2°C (135°F) melting point fat, is added to a meat emulsion containing meat, fillers such as cracker meal or bred crumbs, and binders such as soy protein concentrate, at a level of from about 0.75%–2.5% of the emulsion, and the emulsion is heated at about 57°C–66°C for 90 minutes. The meat emulsion is then formed into the desired shape, such as meatballs, and cooked for about 10 minutes to set the emulsion and release the remainder of the acid into the meat emulsion, which has a final pH of less than 4.5.

The nature of the sauce component will depend upon the type of product desired and the condiments included therein, and may contain ingredients such as spices, for example, oregano, parsley, basil; flavorings, for example, garlic, pepper, onion; corn syrup; vegetable oil; salt; and the like. Of course, the ingredients used and the amounts of ingredients will be determined by the taste desired for the sauce component. The important characteristics of the sauce component are that it have a pH of less than 4.6, have a taste which is compatible with an acid pH and with the other components of the product, and have a viscosity such that the sauce surrounds the other components of the product when packed in containers. The desired acidity may be provided in the sauce component by the inclusion therein of any of the food grade acids disclosed above, and/or an acid food, such as tomato paste, or tomato sauce. Since tomato products have both a taste which is compatible with many pasta products and a pH of less than 4.6, it is generally preferred to use tomato sauce or paste, with or without additional food grade acids, as an acid food in the preparation of the sauce component. Other ingredients of the sauce are determined by the taste desired and include corn syrup, vegetable oil, seasoning and spices, together with sufficient water to provide the sauce with the desired viscosity.

In accordance with one embodiment of the present invention, the acidified meat component is included in the sauce. For example, an acidified meat sauce having a pH of less than 4.6, preferably between 4.3 and 4.4, is prepared by blanching particles of ground meat in a hot acid solution having a pH of about 3.5 or below, and then adding the remaining ingredients of the sauce to the hot acid solution to form the meat sauce.

The acidified pasta and meat components are combined in a suitable container with the acidic sauce so that the sauce surrounds the pasta and meat components in the container.

While the procedure used in filling the components into the container may vary, it is necessary that each of the components be at a temperature of about 85°C or above when filled into containers.

The pasta component filled into containers may either be freshly prepared, undried pasta, or it may have been previously prepared and then dried or frozen for storage and subsequent use. If previously prepared, the pasta is hydrated and heated, preferably in two steps, such as by first heating in boiling water for 2–10 minutes, and then heating in a steam blancher at a temperature of 88°C or above for about 5–15 minutes just prior to filling into the containers.

The components, each of which has a pH of less than 4.6 and is at a temperature of 85°C or higher, are filled into suitable containers, such as cans, glass jars, and the like, so that the pasta and meat components are surrounded by the sauce, the filled containers are then sealed and heat processed to render the product commercially sterile. In accordance with the present invention, the containers are heat processed under atmospheric conditions which provide a sterilizing value equivalent to 10 minutes at 93°C. For example, a commercially sterile product is produced by processing the sealed containers for 13 minutes in hot water or steam at 88°C, when the components are filled into the containers at a temperature of 85°C–88°C. Upon completion of heat processing, the containers are rapidly cooled to a temperature of about 43°C or below in order to preserve the texture of the products.

The pasta-containing product of the present invention is commercially sterile and requires no refrigeration, with the pasta having a desirable firm texture and appearance.

The following examples are given to illustrate, but not to limit, the present invention. In these examples, and elsewhere herein, proportions and percentages are expressed as parts by weight unless otherwise indicated.

Example 1

A spaghetti with meat sauce product is prepared in accordance with the present invention by the following procedure.

The pasta component is prepared by dry blending

| Ingredient | % by weight |
| --- | --- |
| durum flour | 82.4 |
| dehydrated egg white | 8.0 |
| wheat gluten | 7.4 |
| malic acid | 1.1 |
| glyceryl monostearate | 1.1 |

The dry mix is transferred to a conventional continuous macaroni press and water is added, with mixing, to form a dough having a moisture content of about 31%. The dough is kneaded and vacuumized to remove occluded air bubbles and extruded through a die having openings 1.8 mm in diameter to form continuous strands of spaghetti. The spaghetti strands thus formed are dried at 32°C for about 48 hours to reduce their moisture content to about 12%, and are cut into pieces about 254–305 mm in length. The acidified spaghetti thus formed has a pH of about 4.3.

The meat sauce component is prepared by the following formulation.

| Ingredient | % by weight |
| --- | --- |
| water | 54.9 |
| beef | 19.2 |
| tomato paste, 31% | 17.5 |
| corn syrup | 4.6 |
| cottonseed oil | 1.1 |
| salt | 0.9 |
| citric acid | 0.2 |
| flavorings, spices | 1.6 |

The meat is ground two times through a 6.4 mm grid, and is then added to a boiling solution of the citric acid and water having a pH of below 3.5, with the resulting meat slurry being heated to boiling for 1 minute. The remainder of the sauce ingredients are then added to the hot acidified meat slurry, with the resulting meat sauce, which has a pH of about 4.3, being maintained at a temperature of at least 91°C.

In producing the product, the dried spaghetti is heated in boiling water for 5 minutes to hydrate and cook the spaghetti, after which the spaghetti is rinsed, drained and heated in a steam blancher at a temperature of above 91°C for 5 minutes to heat the spaghetti to a temperature of at least 85°C. The spaghetti, while at a temperature of at least 85°C, is filled into 454 g glass jars, and the meat sauce, which also has a temperature of at least 85°C, is added to the jars in an amount sufficient to provide a ratio of about 16 parts of spaghetti per 100 parts of meat sauce, so that the meat sauce completely covers the spaghetti. The filled jars are then sealed, inverted and heated in hot water or steam at a temperature of at least 88°C for 13 minutes. The jars are then cooled to 43°C or below by quenching in water.

The resulting product is commercially sterile, with the product having a mass average pH of about 4.7 immediately after production, and about 4.45 after 24 hours. The spaghetti has a firm, freshly cooked texture and appearance.

## Example 2

A meat ravioli with meat sauce product is prepared in accordance with the present invention by the following procedure:

The pasta component is prepared using the following dry ingredients:

| Ingredient | % by weight |
|---|---|
| durum flour | 91.2 |
| wheat gluten | 5.0 |
| egg white solids | 3.0 |
| malic acid | 0.8 |

The dry ingredients are blended in a paddle mixer for 10 minutes and water is added in an amount of about 36 parts by weight water per 100 parts by weight of dry ingredients, to form a dough having pH of about 4.3. The dough is formed into sheets about 4 mm (0.16 inch) thick on a conventional sheeter-kneader, and the pasta sheets are then formed into rolls.

An acidified meat filling for the ravioli is formed using the following ingredients:

| Ingredient | % by weight |
|---|---|
| cooked meat dice | 38.8 |
| whole eggs | 19.4 |
| water | 20.5 |
| cracker crumbs | 10.7 |
| cheese | 6.8 |
| salt | 1.2 |
| malic acid | 0.9 |
| flavoring, spices | 1.7 |

The cooked meat dice are ground through a 3.2 mm grid. To this is added a solution of the malic acid in about 1/4 of the water of the formulation, and the resulting meat slurry mixed for about 10 minutes. The eggs and the remaining filling ingredients are then mixed into the meat slurry to provide an acidified meat slurry having a pH of about 4.35. The rolls of sheeted dough and the acidified meat filling are loaded into a conventional ravioli machine and formed into ravioli pieces, about 2.5 cm square, containing about 38% by weight of the meat filling.

An acidified meat sauce having a pH of about 4.3 is prepared in accordance with the formulation and procedure used in Example 1, except that the sauce is formulated to have a meat content of about 7%–8%, and the meat sauce is heated to a temperature of at least 91°C.

In producing the product, the ravioli pieces are blanched in boiling water for several minutes, and are then heated in a steam blancher at a temperature of at least 88°C for 5 minutes, so that the temperature of the ravioli pieces is at least 85°C. The ravioli pieces and meat sauce, both of which are at a temperature of 85°C or above, are filled into glass jars in an amount sufficient to provide a ratio of about 30 parts of ravioli per 70 parts of meat sauce, so that the meat sauce completely covers and surrounds the ravioli pieces. The filled jars are then sealed, inverted and heated in hot water or steam at a temperature of at least 88°C for 13 minutes. The jars are then cooled to 43°C or below by quenching in water.

The ravioli product thus produced is commercially sterile, and has a mass average pH of about 4.45 immediately after production and 24 hours after production. The pasta portion of the product has a desirable firm texture.

While the invention has been particularly described and illustrated with reference to a three-component product, that is, acidified pasta, acidified meat and acidified sauce, it is to be understood that products of the present invention may be formulated and produced with only two components, namely acidified pasta and an acidified liquid phase such as sauce, gravy, dressing, and the like. Such products include, for example, a cheese filling for various pasta products such as ravioli, manicotti, cannelloni, etc. with an acidified cheese sauce.

## Claims

1. A process for producing commercially sterile, hydrated pasta-containing product containing a pasta component having a firm texture, and a liquid sauce component which comprises:
– forming an acidified pasta dough by mixing a farinaceous material selected from the group consisting of semolina, durum flour, farina, flour, and mixtures thereof, sufficient edible acid to provide the pasta dough with a pH of less than 4.6, from 2–20% by weight of gluten, from 3–25% by weight of an egg material selected from whole eggs, egg white and egg yolk, from 0–5% of glyceryl monostearate, and sufficient water to provide an acidified dough having a moisture content of from 25%–38%,
– forming the acidified dough under pressure into a pasta component selected from spaghetti, macaroni, noodles and sheets,
– preparing a liquid sauce component having a pH of below 4.6,
– heating the pasta component and the sauce component to a temperature of at least 85°C and combining said components, while at a temperature of at least 85°C, in a container so that the sauce component surrounds the pasta component,
– sealing the container, and
– heat processing the sealed container under atmospheric conditions to provide a sterilizing value equivalent to about 10 minutes at 93°C, whereby the contents of the container are rendered commercially sterile without adversely affecting the taste, texture or appearance of the pasta.

2. The process defined in claim 1 in which the sauce component contains acidified meat which is prepared by blanching ground meat particles in a hot aqueous solution of an edible acid for a period of time sufficient to reduce the pH of the meat particles to below 4.6, and adding flavoring and spices to the hot acid solution containing the acidified meat particles to thereby provide a meat containing sauce having a pH of below 4.6.

3. The process defined in claim 1 in which the acidified pasta dough is formed under pressure into sheets which are combined with acidified ground meat having a pH of below 4.6 to form ravioli pieces having a pH of less than 4.6.

4. The process defined in claim 2 in which an aqueous solution of an edible acid having a pH of 3.5 or below is contacted with ground cooked meat and mixed for a period of time sufficient to reduce the pH of the meat particles to below 4.6, thereby providing said acidified meat.

5. The process defined in claim 1 in which the acidified pasta dough is extruded through a die to form spaghetti strands having a pH of less than 4.6 and dried to a moisture content of about 12%.

6. The process defined in claim 5 in which the acidified dried spaghetti is heated in sufficient hot water to rehydrate and cook the spaghetti, and the rehydrated spaghetti is heated to a temperature of at least 85°C prior to combining with the sauce component.

7. The process defined in claim 1 in which an acidified meat component, having a pH of below 4.6, is combined with the acidified pasta and sauce components in the container.

8. The process defined in claim 7 in which the acidified meat component is in the form of meatballs which are prepared by adding to a meat emulsion an edible acid encapsulated with an edible fat having a melting point of between about room temperature and 66°C, in an amount of about 0.75%–2.5% by weight of the emulsion, heating the emulsion to a temperature above the melting point of said edible fat, forming the meat emulsion into meatballs and heating the emulsion at a temperature and for a period of time sufficient to set the emulsion and release all of the acid into the emulsion.

9. The process defined in claim 1 in which an edible acid and a high acid food are included in the sauce phase to provide the sauce with a pH of below 4.6.

## Revendications

1. Procédé de préparation d'un produit hydraté, contenant une pâte alimentaire, stérile pour une utilisation commerciale, contenant comme constituants une pâte alimentaire à texture ferme et une sauce liquide, qui consiste:
– à former une pâte acidifiée pour pâtes alimentaires par mélange d'une matière farineuse choisie dans le groupe comprenant la semoule, la farine de blé dur, la fécule, la farine et leurs mélanges, une quantité suffisante d'un acide comestible pour conférer à la pâte pour pâtes alimentaires un pH inférieur à 4,6, 2 à 20% de gluten, 3 à 25% en poids d'une matière à base d'oeuf choisie entre les oeufs entiers, le blanc d'oeuf et le jaune d'oeuf, 0 à 5% de monostéarate de glycérol et une quantité suffisante d'eau pour produire une pâte acidifiée ayant une teneur en humidité de 25% à 38%,
– à mettre la pâte acidifiée sous pression sous forme d'une pâte alimentaire choisie entre les spaghetti, les macaroni, les nouilles et des feuilles,
– à préparer comme constituant une sauce liquide ayant un pH inférieur à 4,6,
– à chauffer la pâte alimentaire et la sauce servant de constitiuants à une température d'au moins 85°C et à mélanger lesdits constituants, tandis qu'ils sont à une température d'ou moins 85°C, dans un récipient, de sorte que la sauce entoure la pâte alimentaire,
– à obutrer le récipient, et
– à soumettre le récipient clos à un traitement thermique dans des conditions atmosphériques pour parvenir à un degré de stérilisation équivalant à environ 10 minutes à 93°C, le contenu du récipient étant ainsi rendu stérile pour une utilisation commerciale, sans influencer de manière néfaste le goût, la texture ou l'aspect de la pâte alimentaire.

2. Procédé suivant la revendication 1, dans lequel la sauce servant de constituant contient de la viande acidifiée qui est préparée en faisant blanchir des particules de viande broyée dans une solution aqueuse chaude d'un acide comestible pendant un temps suffisant pour abaisser le pH des particules de viande à une valeur inférieure à 4,6, et en ajoutant un agent aromatisant et des épices à la solution acide chaude contenant les particules de viande acidifiée pour produire ainsi une sauce à la viande ayant un pH inférieur à 4,6.

3. Procédé suivant la revendication 1, dans lequel la pâte acidifiée pour pâtes alimentaires est mise sous pression sous forme de feuilles qui sont mélangées à de la viande broyée acidifiée ayant un pH inférieur à 4,6 pour former des ravioli ayant un pH inférieur à 4,6.

4. Procédé suivant la revendication 2, dans lequel une solution aqueuse d'un acide comestible ayant un pH égal ou inférieur à 3,5 est mise en contact avec de la viande cuite broyée et mélangée pendant un temps suffisant pour abaisser le pH des particules de viande à une valeur inférieure à 4,6, produisant ainsi la viande acidifiée.

5. Procédé suivant la revendication 1, dans lequel la pâte acidifiée pour pâtes alimentaires est extrudée à travers une filière pour former des brins de spaghetti ayant un pH inférieur à 4,6 et est séchée à une teneur en humidité d'environ 12%.

6. Procédé suivant la revendication 5, dans lequel le spaghetti séché acidifié est chauffé dans und quantité suffisante d'eau chaude pour permettre sa réhydratation et sa cuisson, et le spaghetti réhydraté est chauffé à une température d'au moins 85°C avant son mélange à la sauce servant de constituant.

7. Procédé suivant la revendication 1, dans lequel une viande acidifiée servant de constituant, ayant un pH inférieur à 4,6, est mélangée dans le récipient à la pâte alimentaire acidifiée et à la sauce servant de constituants.

8. Procédé suivant la revendication 7, dans lequel la viande acidifiée servant de constituant est sous forme de boulettes de viande qui sont préparées par addition à une émulsion de viande d'un acide comestible encapsulé avec une graisse comestible ayant un point de fusion compris dans l'intervalle d'une valeur environ égale à la température ambiante et 66°C, en une quantité d'environ 0,75% à 2,5% en poids de l'émulsion, chauffage de l'émulsion à une température supérieure au point de fusion de ladite graisse comestible, mise de l'émulsion de viande sous forme de boulettes de viande et chauffage de l'émulsion à une température et pendant un temps suffisants pour faire prendre l'émulsion et libérer la totalité de l'acide présent dans l'émulsion.

9. Procédé suivant la revendication 1, dans lequel un acide comestible et un aliment fortement acide sont incorporés à la phase de sauce pour donner à la sauce un pH inférieur à 4,6.

## Patentansprüche

1. Verfahren zur Herstellung eines für den Handel ausreichend sterilen, hydratisierten, Teigwarenenthaltenden Produktes mit einem Gehalt an einer eine feste Textur aufweisenden Teigwarenkomponente und einer flüssigen Saucenkomponente, welches Verfahren die folgenden Schritte umfaßt:
– Ausbildung eines angesäuerten Teigwarenteiges durch Vermischen eines stärkehaltigen Materials, ausgewählt aus der aus Grieß, Hartweizenmehl, Stärkemehl, Mehl und Gemischen hiervon bestehenden Gruppe, genügend Genußsäure, damit der Teigwarenteig einen pH-Wert von unter 4,6 aufweist, von 2 bis 20 Gew.-% Gluten, von 3 bis 25 Gew.-% eines Eimaterials, ausgewählt unter Vollei, Eiweiß und Eidotter, von 0 bis 5 Gew.-% Glycerylmonostearat und ausreichend Wasser, um einen angesäuerten Teig mit einem Feuchtigkeitsgehalt von 25 bis 38% zu ergeben,
– Verformen des angesäuerten Teiges unter Druck zu einer Teigwarenkomponente, ausgewählt unter Spaghetti, Macaroni, Nudeln und Platten,
– Bereiten einer flüssigen Saucenkomponente mit einem pH-Wert von unter 4,6,
– Erhitzen der Teigwarenkomponente und der Saucenkomponente auf eine Temperatur von wenigstens 85°C und Vereinigen dieser Komponenten, während sie sich auf einer Temperatur von wenigstens 85°C befinden, in einem Behälter, sodaß die Saucenkomponente die Teigwarenkomponente umgibt,
– Verschließen des Behälters und
– Wärmebehandeln des verschlossenen Behälters unter Atmosphärenbedingungen zur Erzielung eines Sterilisationswertes, der etwa 10 Minuten bei 93°C äquivalent ist, wodurch der Behälterinhalt für den Handel ausreichend steril gemacht wird, ohne den Geschmack, die Textur oder das Aussehen der Teigware nachteilig zu beeinflussen.

2. Verfahren nach Anspruch 1, worin die Saucenkomponente angesäuertes Fleisch enthält, das hergestellt wird durch Blanchieren gemahlener Fleischteilchen in einer heißen wäßrigen Lösung einer Genußsäure während einer Zeitspanne, die zur Verminderung des pH-Wertes der Fleischteilchen auf einen Wert unter 4,6 ausreicht, und Zusetzen von Geschmacksmitteln und Gewürzen zu der die angesäuerten Fleischteilchen enthaltenden heißen sauren Lösung, sodaß eine Fleischsauce mit einem pH-Wert von unter 4,6 bereitet wird.

3. Verfahren nach Anspruch 1, worin der angesäuerte Teigwarenteig unter Druck zu Platten verformt wird, die mit angesäuertem gemahlenem Flaisch mit einem pH-Wert von unter 4,6 unter Ausbildung von Raviolistücken mit einem pH-Wert von unter 4,6 vereinigt werden.

4. Verfahren nach Anspruch 2, worin eine wäßrige Lösung einer Genußsäure mit einem pH-Wert von 3,5 oder darunter mit gemahlenem gekochtem Fleisch in Berührung gebracht und während einer ausreichend langen Zeit vermischt wird, um den pH-Wert der Fleischteilchen auf einen Wert unter 4,6 zu vermindern, wodurch das angesäuerte Fleisch gebildet wird.

5. Verfahren nach Anspruch 1, worin der angesäuerte Teigwarenteig durch eine Form zur Ausbildung von Spaghettisträngen mit einem pH-Wert von unter 4,6 extrudiert und auf einen Feuchtigkeitsgehalt von etwa 12% getrocknet wird.

6. Verfahren nach Anspruch 5, worin die angesäuerten getrockneten Spaghetti in ausreichend heißem Wasser zum Rehydratisieren und Kochen der Spaghetti erhitzt werden und die rehydratisierten Spaghetti auf eine Temperatur von wenigstens 85°C erwärmt werden, bevor sie mit der Saucenkomponente vereinigt werden.

7. Verfahren nach Anspruch 1, worin eine angesäuerte Fleischkomponente mit einem pH-Wert von unter 4,6 mit den angesäuerten Teigwaren- und Saucenkomponenten im Behälter vereinigt werden.

8. Verfahren nach Anspruch 7, worin die angesäuerte Fleischkomponente in Form von Fleischbällchen vorliegt, die hergestellt werden durch Zusetzen einer Genußsäure, die mit einem eßbaren Fett mit einem Schmelzpunkt zwischen etwa Raumtemperatur und 66°C umhüllt ist, zu einer Fleischemulsion in einer Menge von etwa 0,75 bis 2,5 Gew.-% der Emulsion, Erwärmen der Emulsion auf eine Temperatur über dem Schmelzpunkt des eßbaren Fettes, Verformen der Fleischemulsion zu Fleischbällchen und Erwärmen der Emulsion auf eine ausreichende Temperatur und während einer ausreichenden Zeit, um die Emulsion zu verfestigen und die gesamte Säure in die Emulsion freizusetzen.

9. Verfahren nach Anspruch 1, worin eine Genußsäure und ein Nahrungsmittel mit hohem Säuregehalt in die Saucenphase eingearbeitet werden, um der Sauce einen pH-Wert von unter 4,6 zu erteilen.